# EUROPÄISCHE PATENTSCHRIFT

(11) **EP 3 140 672 B1**
(45) Veröffentlichungstag und Bekanntmachung des Hinweises auf die Patenterteilung: **24.07.2019**
(21) Anmeldenummer: 15710717.8
(22) Anmeldetag: 14.03.2015
(51) Int. Cl.: G06T 7/00, G01S 17/10, G01S 17/95

(54) **SYSTEM ZUR DETEKTION VON NEBEL DIREKT VOR EINEM KRAFTFAHRZEUG**
SYSTEM FOR DETECTING FOG DIRECTLY IN FRONT OF A MOTOR VEHICLE
SYSTÈME DE DÉTECTION DE BROUILLARD DIRECTEMENT À L'AVANT D'UN VÉHICULE À MOTEUR

(30) Priorität: 08.05.2014 DE 102014006760
(43) Veröffentlichungstag der Anmeldung: 15.03.2017
(73) Patentinhaber: Audi AG, 85045 Ingolstadt (DE)
(72) Erfinder: ALTINGER, Harald, 85049 Gerolfing (DE)
(74) Vertreter: Thielmann, Frank
(86) Internationale Anmeldenummer: PCT/EP2015/000569
(87) Internationale Veröffentlichungsnummer: WO 2015/169408

(56) Entgegenhaltungen:
- EP-A2- 1 118 877
- ROMAIN GALLEN ET AL: "Towards night fog detection through use of in-vehicle multipurpose cameras", INTELLIGENT VEHICLES SYMPOSIUM (IV), 2011 IEEE, IEEE, 5. Juni 2011 (2011-06-05), Seiten 399-404, XP031998996, DOI: 10.1109/IVS.2011.5940486 ISBN: 978-1-4577-0890-9
- Anonymous: "Fernlicht - Wikipedia", , 15. Mai 2013 (2013-05-15), XP055187138, Gefunden im Internet: URL:https://web.archive.org/web/2013051515 5722/http://de.wikipedia.org/wiki/Fernlich t [gefunden am 2015-05-04]

## Beschreibung

Die Erfindung betrifft ein Kraftfahrzeug mit einem System zum Erkennen von Nebel in einem vorbestimmten Nahbereich vor einem Kraftfahrzeug. Zu der Erfindung gehört auch ein Verfahren zum Erkennen des Nebels.

Fährt ein Kraftfahrzeug durch eine Nebelbank, so darf währenddessen nicht das Fernlicht des Kraftfahrzeugs aktiviert sein, da es ansonsten zu einer Selbstblendung des Fahrers kommt, weil das Licht des Fernlichtscheinwerfers mit einem im Vergleich zum Abblendlicht höheren Abstrahlwinkel abgestrahlt wird und das im Nebel gestreute Licht zu einem größeren Anteil zurück zum Fahrer hin gestreut wird. Daher ist es wünschenswert, Nebel im Nahbereich vor dem Kraftfahrzeug zu erkennen und das Vorhandensein von Nebel zu signalisieren.

In Bezug auf die Detektion von Gegenständen vor dem Kraftfahrzeug ist aus der WO 97/29926 A1 ein Sensorsystem bekannt, um Wassertropfen auf einer Windschutzscheibe des Kraftfahrzeugs zu erkennen. Im Kraftfahrzeuginnenraum sind Fotoelemente angeordnet. Vom Kraftfahrzeuginnenraum aus strahlen Leuchtdioden Licht durch die Windschutzscheibe nach vorne ab. Bei Vorhandensein von Wassertropfen auf der Windschutzscheibe wird das Licht der Leuchtdioden zurück zu den Fotoelementen gestreut und dort somit detektiert.

Aus der DE 100 58 633 A1 ist ein Verfahren zum Bestimmen einer Sichtweite eines Fahrzeugführers eines Kraftfahrzeugs bekannt. Es wird ein Wert für die Trübung der das Fahrzeug umgebenden Atmosphäre ermittelt und mittels einer Formel daraus ein Schätzwert für die Sichtweite bestimmt.

Im Zusammenhang mit einer Erkennung von Gegenständen vor einem Kraftfahrzeug ist aus der EP 2 131 308 B1 ein Verfahren zum Klassifizieren eines in mindestens einem Bild eines im Bereich vor einem Kraftfahrzeug detektierten Objekts beschrieben. Eine Kamera filmt den Frontbereich vor dem Kraftfahrzeug, und auf der Grundlage der Kamerabilder werden darin abgebildete Objekte klassifiziert. Um hierbei eine robuste Klassifikation zu erhalten, werden die Objekte mittels eines Frontscheinwerfers des Kraftfahrzeugs angestrahlt.

In der WO 99/47396 A1 ist eine Vorrichtung zur Erkennung einer Ausbildung eines Belages auf einer Windschutzscheibe eines Kraftfahrzeugs beschrieben. Hierzu wird ein Brechungsverhalten der Windschutzscheibe für elektromagnetische Wellen gemessen. Der Belag kann insbesondere eine Benetzung durch Niederschlag oder Nebel sein.

In der DE 199 02 015 A1 ist ein Kraftfahrzeug beschrieben, das eine Kamera und eine Bildverarbeitungseinrichtung aufweist, welche in den Kamerabildern das Vorhandensein von Regen, Nebel und Schneefall erkennt und daraufhin ein automatisches Ein- und Ausschalten eines Abblendlichts bewirkt.

In der DE 101 46 786 A1 ist ein Kraftfahrzeug beschrieben, bei welchem eine automatische Schaltung von Beleuchtungseinrichtungen bereitgestellt ist, durch welche auch Nebelscheinwerfer und eine Nebelschlussleuchte eingeschaltet werden können, falls Nebel erkannt wird. Der Nebel wird auf der Grundlage einer Kontrastmessung in Kamerabildern erkannt.

In der US 2006/0163458 A1 ist ein Verfahren zur Erkennung einer feuchten Windschutzscheibe beschrieben. Hierzu wird ein Brechungsverhalten einer Oberfläche der Windschutzscheibe ermittelt.

Der Erfindung liegt die Aufgabe zugrunde, einen Nebelbereich zu erkennen, falls sich dieser in einem vorbestimmten Nahbereich vor einem Kraftfahrzeug befindet.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Mittels des erfindungsgemäßen Verfahrens wird ein Nebelbereich, also eine Nebelbank oder allgemein ein Bereich, in welchem sich Nebel befindet, in einem vorbestimmten Nahbereich vor dem Kraftfahrzeug erkannt. Unter Nahbereich ist insbesondere ein Kreissegment zu verstehen, welches sich in einem Winkelbereich von -40° bis +40° bezüglich der Fahrzeuglängsachse, insbesondere -20° bis +20° bezüglich der Fahrzeuglängsachse, und sich in einem Bereich von 2 Meter bis 20 Meter, insbesondere in einem Bereich von 2 Meter bis 10 Meter vor dem Kraftfahrzeug erstreckt. Für die Erkennung wird durch eine Lichtquelle des Kraftfahrzeugs ein Lichtkegel in den Nahbereich abgestrahlt und währenddessen durch eine Kamera des Kraftfahrzeugs ein Kamerabild von dem Nahbereich erzeugt. Eine Analyseeinrichtung ermittelt in dem Kamerabild eine örtliche Helligkeitsverteilung. Die Analyseeinrichtung signalisiert das Vorhandensein von Nebel in dem Nahbereich mittels eines Nebelsignals, falls die Helligkeitsverteilung ein vorbestimmtes Verteilungskriterium erfüllt. Die zum Erzeugen des Kamerabilds verwendete Kamera kann beispielsweise eine Videokamera oder auch eine Einzelbildkamera sein. Es kann sich hier auch um eine 3D-Kamera, beispielsweise eine Stereokamera oder eine TOF-Kamera (TOF - Time of Flight) handeln. Das Kamerabild kann 2D-Bilddaten oder 3D-Bilddaten umfassen.

Das erfindungsgemäße Verfahren weist den Vorteil auf, dass es mit Hilfe von Komponenten realisiert werden kann, die bereits im Kraftfahrzeug zum Bereitstellen anderer Funktionalitäten in der Regel bereitgestellt sind, nämlich einer nach vorne hin abstrahlenden Lichtquelle, wie beispielsweise eines Frontscheinwerfers, sowie einer Kamera, wie sie beispielsweise zur Umfeldüberwachung bereitgestellt sein kann, sowie einer Prozessoreinrichtung, die beispielsweise in einer zentralen Recheneinrichtung des Kraftfahrzeugs installiert sein kann. Mittels der Prozessoreinrichtung kann als die Analyseeinrichtung ein entsprechend ausgestaltetes Programmmodul ausgeführt werden.

In Bezug auf das analysierte Verteilungskriterium sieht die Erfindung vor, dass durch das Verteilungskriterium ein erwarteter Helligkeitsbereich in dem Kamerabild definiert wird, in welchem ein Licht des Lichtkegels im Kamerabild erkennbar sein müsste, falls der Nahbereich nebelfrei ist. Mit anderen Worten fällt dann das Licht des Lichtkegels auf die Straße oder den Straßenrand in einer größeren Entfernung vom Kraftfahrzeug, was im Kamerabild einem Bildbereich entspricht, der oberhalb der Motorhaube einen vorbestimmten Mindestabstand aufweist. Das Verteilungskriterium kann auch besagen, dass ein zu erwartender Helligkeitsbereich definiert ist, wie er sich ergibt, wenn der Nahbereich neblig ist. Dann wird das Licht des Lichtkegels im Nahbereich gestreut, was im Kamerabild einem Bildbereich entspricht, der oberhalb der Motorhaube angeordnet ist und sich hierbei höchstens bis zu einem Höchstabstand von der Motorhaube erstreckt. Es kann auch vorgesehen sein, zum Ausblenden von Lichtquellen aus der Umgebung ein Differenzbild zweier Kamerabilder zu berechnen, eines mit deaktivierter eigener Lichtquelle und eines mit aktivierter eigener Lichtquelle.

Die Kamera kann zusätzlich auch derart ausgerichtet sein, dass auch ein vom Kraftfahrzeug aus gesehen jenseits des Nachbereichs angeordneter Fernbereich in dem Kamerabild abgebildet ist. Hierdurch ist ein Vergleich der Helligkeitsverteilungen des Nah- und des Fernbereichs ermöglicht.

Der Lichtkegel wird bevorzugt nicht direkt nach vorne hin abgestrahlt, sondern es wird die mittlere Abstrahlrichtung bezüglich einer Fahrzeuglängsachse des Kraftfahrzeugs schräg ausgerichtet, insbesondere in einem Winkel größer als 20°, insbesondere größer als 30°. Das schräge Abstrahlen des Lichtkegels weist den Vorteil auf, dass der Fahrer bei Vorhandensein von Nebel im Nahbereich durch den für die Erkennung abgestrahlten Lichtkegel wenig oder gar nicht geblendet wird. Mit mittlerer Abstrahlrichtung ist diejenige Achse gemeint, die durch einen Flächenschwerpunkt einer von der Lichtquelle mit dem Lichtkegel angestrahlten Fläche verläuft, wobei der Flächenschwerpunkt unter Berücksichtigung der Lichtintensität der einzelnen Flächenelemente berechnet ist.

Ein weiterer Vorteil ergibt sich, wenn der Lichtkegel als Lichtimpuls abgestrahlt wird, welcher weniger als 0,5s, insbesondere weniger als 0,2s andauert. Hierdurch kann ebenfalls in vorteilhafter Weise eine Blendung des Fahrers vermieden werden.

Bevorzugt wird ein Aktivierungszeitpunkt zum Aktivieren der Lichtquelle auf der Grundlage eines Shutter-Signals der Kamera mit einem Aufnahmebeginn des Kamerabilds synchronisiert. Hierdurch lässt sich in vorteilhafter Weise ebenfalls die Zeitdauer, für welche der Lichtkegel zum Erfassen des Nebels abgestrahlt wird, verkürzen, was ebenfalls das Risiko einer Blendung des Fahrers verringert.

Wie bereits ausgeführt, kann es sich bei der Lichtquelle um einen Scheinwerfer des Kraftfahrzeugs handeln, wodurch die Lichtquelle besonders aufwandsarm bereitgestellt werden kann. Eine andere Ausführungsform sieht vor, dass die Lichtquelle eine Infrarotlichtquelle ist. Hierdurch ergibt sich der Vorteil, dass sie auch für längere Zeit aktiv sein und Infrarotlicht abstrahlen kann, ohne dass sich hierdurch eine Blendung des Fahrers ergibt.

Ein weiterer Vorteil ergibt sich, wenn nicht nur ein Kamerabild mit einmalig aktivierter Lichtquelle erfasst wird, sondern nacheinander zusätzlich zum Kamerabild mindestens ein weiterer, gegenüber dem ersten Lichtkegel anders ausgerichteter zweiter Lichtkegel in den Nahbereich abgestrahlt wird und durch die Kamera währenddessen jeweils ein weiteres Kamerabild erzeugt wird. Durch die Analyseeinrichtung wird bei dieser Ausführungsform auf der Grundlage aller Kamerabilder ein Rand des Nebelbereichs ermittelt. Mit anderen Worten wird also durch die Analyseeinrichtung der Nebelbereich vermessen.

Um mehrere Lichtkegel nacheinander zu erzeugen, sieht eine Ausführungsform der Erfindung vor, einen dynamischen Frontscheinwerfer, wie er auch zur richtungsadaptiven Ausleuchtung der Fahrbahn in Kurvenfahrten verwendet werden kann, als Lichtquelle zu nutzen und den Lichtstrahl zu verschwenken. Eine andere Ausführungsform sieht vor, nacheinander unterschiedliche Segmente eines segmentierten LED-Scheinwerfers (LED - Leuchtdiode) zu aktivieren. Bei einem solchen segmentierten LED-Scheinwerfer sind die Hauptabstrahlrichtungen der einzelnen Segmente in unterschiedliche Richtungen ausgerichtet, was zum Erzeugen mehrere unterschiedlicher Lichtkegel verwendet werden kann. Eine besonders günstige, auch in herkömmlichen Kraftfahrzeugen realisierbare Ausführungsform sieht vor, nacheinander und/oder abwechselnd einen Nebelscheinwerfer, ein Abblendlicht und ein Fernlicht zu aktivieren und hierdurch den Nahbereich aus unterschiedlichen Richtungen zu beleuchten.

Besonders bevorzugt wird das Verfahren im Zusammenhang mit einer Steuereinrichtung zur Gegenverkehrserkennung und automatischen Aktivierung eines Fernlichts des Kraftfahrzeugs verwendet. Eine solche Steuereinrichtung führt eine Gegenverkehrserkennung durch, beispielsweise durch Analyse von frontal ausgerichteten Kamerabildern, und erkennt die Abwesenheit von Gegenverkehr. Ist kein Gegenverkehr erkennbar, so wird das Fernlicht des Kraftfahrzeugs ohne ein Zutun des Fahrers aktiviert. Dies ist insbesondere vorteilhaft bei Nachtfahrten auf Landstraßen. Die Steuereinrichtung ist nun bei der Ausführungsform dazu ausgelegt, das Fernlicht nur dann zu aktivieren, falls auch kein Nebelsignal vorliegt, also bei gleichzeitiger Abwesenheit des Nebelsignals. Hierdurch wird in vorteilhafter Weise verhindert, dass bei Abwesenheit von Gegenverkehr das Fernlicht aktiviert wird, obwohl Nebel vor dem Kraftfahrzeug vorhanden ist und die Aktivierung des Fernlichts zu einer Eigenblendung des Fahrers führen würde.

Zur Durchführung des erfindungsgemäßen Verfahrens ist ein Kraftfahrzeug vorgesehen, welches die Lichtquelle zum Abstrahlen des Lichtkegels in einem vorbestimmten Nahbereich des Kraftfahrzeugs und die Kamera zum Erzeugen eines Kamerabilds von dem Nahbereich während des Abstrahlens aufweist. Bei dem Kraftfahrzeug ist eine Analyseeinrichtung bereitgestellt, beispielsweise ein Programmmodul in einer zentralen Recheneinrichtung des Kraftfahrzeugs, welche zum Ermitteln einer örtlichen Helligkeitsverteilung in dem Kamerabild ausgebildet ist und welche Nebel mittels eines Nebelsignals signalisiert, falls die Helligkeitsverteilung ein vorbestimmtes Verteilungskriterium erfüllt. Das Kraftfahrzeug führt hierbei eine Ausführungsform des erfindungsgemäßen Verfahrens durch.

Besonders bevorzugt ist die Kamera bei dem Kraftfahrzeug oberhalb eines Kopfbereichs des Fahrers angeordnet, insbesondere in einem Rückspiegel und/oder dessen Spiegelfuß integriert. Hierdurch ergibt sich der Vorteil, dass der kritische Nahbereich, von der Kamera aus einer Vogelperspektive erfasst wird, was einen besonders großen Unterschied in der örtlichen Helligkeitsverteilung ergibt, je nachdem, ob Nebel vorhanden ist oder nicht.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine Skizze zur Funktionsweise des Kraftfahrzeugs von Fig. 1 im nebelfreien Fall, und
- Fig. 3: eine Skizze zur Funktionsweise des Kraftfahrzeugs von Fig. 1 bei Nebel.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

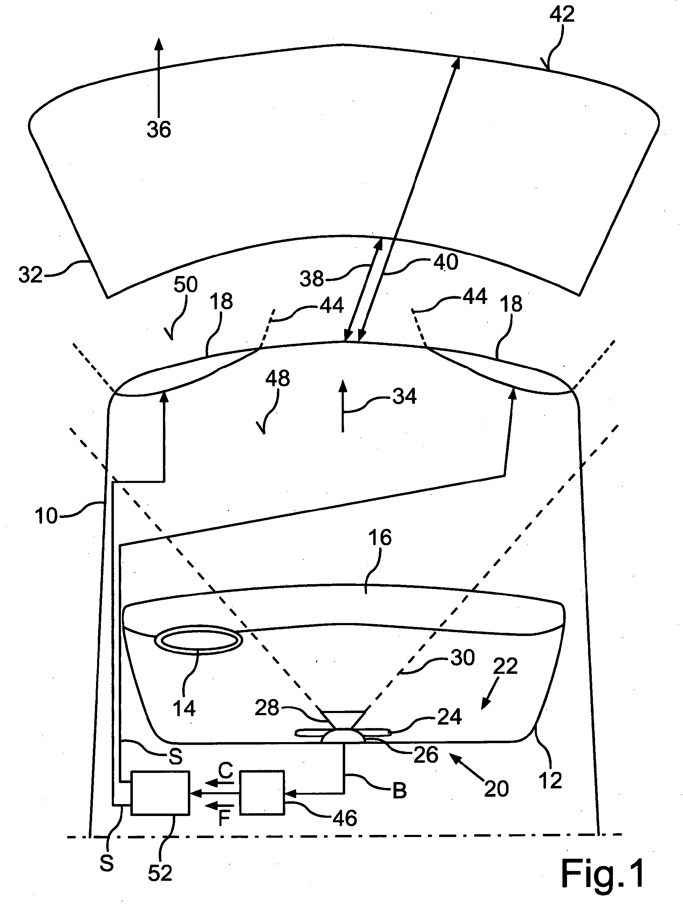

Fig. 1 zeigt aus einer Vogelperspektive eine Frontpartie eines Kraftfahrzeugs 10 mit einer Windschutzscheibe 12, einem Lenkrad 14, einem Armaturenbrett 16 und Frontscheinwerfern 18. An einem Dach 20 des Kraftfahrzeugs 10 kann in einem Kraftfahrzeuginnenraum 22 ein Rückspiegel 24 an einem Spiegelfuß 26 über einem Kopfbereich eines Fahrers angeordnet sein. In den Spiegelfuß 26 kann eine Frontkamera oder kurz Kamera 28 integriert sein, deren Erfassungsbereich 30 auf einen Nahbereich 32 und einen daran in Vorwärtsfahrtrichtung 34 angrenzenden Fernbereich gerichtet ist. Der Nahbereich 32 kann beispielsweise als ein Ringsegment definiert sein, welches einen Innenradius 38 und einen Außenradius 40 aufweisen kann. Beispielsweise kann der Innenradius 38 in einem Bereich von 0,5 Metern bis 2 Metern liegen, der Außenradius 40 in einem Bereich von 5 Metern bis 25 Metern. Der Nahbereich 32 kann bei der Erfindung eine Höhe über einem vorausliegenden Fahruntergrund 50 im Bereich von beispielsweise 0,5 Metern bis 1,5 Metern, insbesondere von 0,5 Metern bis 1 Meter, aufweisen.

Für die folgenden Erläuterungen ist die Unterscheidung zwischen dem Nahbereich 32 und dem Fernbereich 36 wichtig, wie er sich durch die Festlegung des fernen Randes 42 und des Nahbereichs 32 ergibt. Zur Veranschaulichung sind von den Scheinwerfern 18 noch deren Abstrahlkegel 44 angedeutet. Die Kamera 28 kann beispielsweise eine Videokamera oder eine Infrarotkamera sein. Sie kann auch als 3D-Kamera, beispielsweise als Stereokamera oder TOF-Kamera, ausgestaltet sein. Die Kamera 28 kann mit einer Analyseeinrichtung 46 gekoppelt sein, die von der Kamera 28 Bilddaten eines Kamerabildes B empfängt. In dem Kamerabild können je nach Ausrichtung des Erfassungsbereiches 30 eine Motorhaube 48, der Nahbereich 32 und der Fernbereich 36 auf dem Fahruntergrund 50 abgebildet sein.

Die Analyseeinrichtung 46 kann dazu ausgelegt sein, in den Bilddaten eine Helligkeitsverteilung eines von den Frontscheinwerfern 18 als Abstrahlkegel 44 abgestrahlten Lichts zu ermitteln und zu überprüfen, ob das Licht in der vorbestimmten Weise im Fernbereich 36 auf den Fahruntergrund 50 aufgetroffen ist oder im Nahbereich 32 von Nebel zurückgestreut worden ist.

Die Analyseeinrichtung 46 kann über ein Steuersignal C eine Steuereinrichtung 52 steuern, welche die Frontscheinwerfer 18 durch Schaltsignale S steuern kann. Die Steuereinrichtung kann beispielsweise dazu ausgelegt sein, bei einer Fahrt im Dunkeln ein Fernlicht der Frontscheinwerfer 18 zu aktivieren, falls durch die Analyseeinrichtung 46 signalisiert wird, dass kein Gegenverkehr vorliegt. Die Steuereinrichtung 52 kann auch dazu ausgelegt sein, mittels beispielsweise der Frontscheinwerfer 18 Lichtimpulse mit einer Dauer in einem Bereich von bis zu 0,5s zu erzeugen, also beispielsweise das Fernlicht für diese Zeitdauer einzuschalten. Ein Fahrer des Kraftfahrzeugs 10 wird hierdurch selbst dann nicht wesentlich geblendet, wenn das Kraftfahrzeug 10 gerade durch Nebel fährt und das Licht des Fernlichts zum Fahrer zurückgestreut wird. Die Steuereinrichtung 52 kann auch die Abstrahlkegel 44 verändern, beispielsweise lediglich seitlich, also in einem Winkel von beispielsweise größer als 20° bezüglich der Vorwärtsfahrtrichtung 34 einen Lichtimpuls oder Lichtstrahl mittels der Frontscheinwerfer 18 abstrahlen. Die Steuereinrichtung 52 kann hierbei durch ein Steuersignal C der Analyseeinrichtung 46 gesteuert sein, wodurch die Analyseeinrichtung 46 das Abstrahlen eines Lichtimpulses mit der Erzeugung eines Kamerabilds B durch die Kamera 28 koordinieren oder synchronisieren kann, sodass in dem Kamerabild B das Licht des Lichtimpulses erfasst ist.

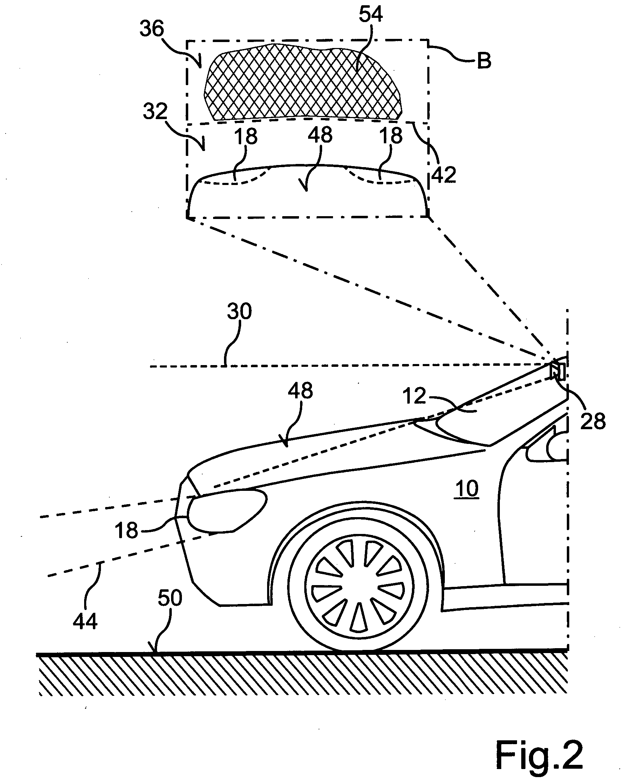

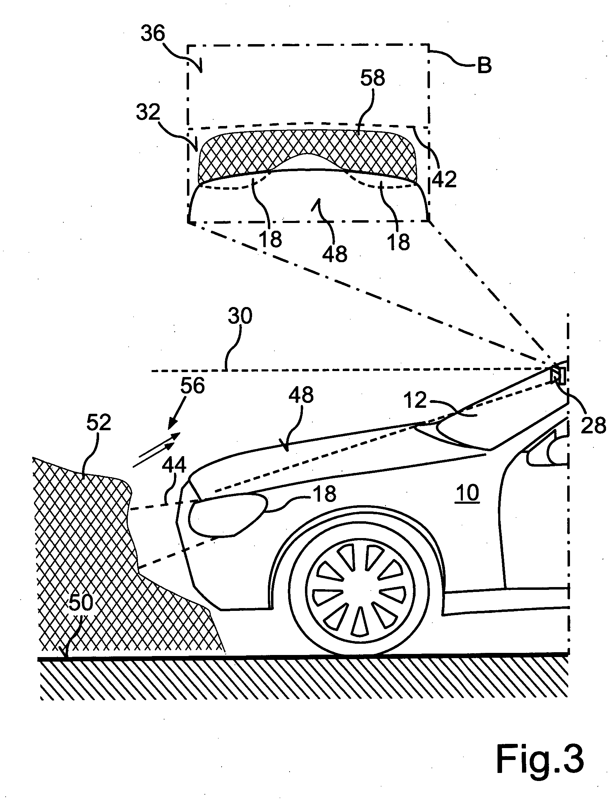

In Fig. 2 und Fig. 3 ist veranschaulicht, wie mittels des Kraftfahrzeugs 10 erkannt werden kann, ob das Kraftfahrzeug 10 gerade durch Nebel fährt. Fig. 2 stellt hierbei eine Situation ohne Nebel dar, während Fig. 3 zeigt, wie das Kraftfahrzeug 10 gerade durch eine Nebelbank 52 fährt.

In Fig. 2 und Fig. 3 ist jeweils eine Seitenansicht des Kraftfahrzeugs 10 gezeigt. Die Frontscheinwerfer 18 strahlen den Abstrahlkegel 44 nach vorne ab. In Fig. 2 und Fig. 3 ist jeweils auch das Kamerabild B dargestellt, wie es sich einmal ohne Nebel (Fig. 2) und einmal mit Nebel (Fig. 3) aufgrund des von den Frontscheinwerfern 18 abgestrahlten Lichts ergibt.

In Fig. 2 ist gezeigt, dass das Licht auf den Fahruntergrund 50 im Fernbereich 36 auftrifft und hierdurch ein heller Bereich 54 in einem oberen Teil des Bildes B, jenseits oder oberhalb der Grenze 42, entstanden ist.

Bei Nebel (Fig. 3) wird das Licht der Frontscheinwerfer 18 durch die Nebelbank 52 zurückgestreut, wobei dieses Streulicht 56 als ein heller Bereich 58 in dem Kamerabild B unmittelbar oberhalb der Motorhaube 48, und insbesondere auch unterhalb der Grenze 42, erscheint. Mit anderen Worten ergeben sich zwei typische Muster der Helligkeitsverteilung je nachdem, ob das Kraftfahrzeug 10 durch Nebel fährt oder nicht.

Die Analyseeinrichtung 46 erzeugt ein Nebelsignal F, falls Nebel erkannt wird. Das Nebelsignal F kann von der Analyseeinrichtung 46 an die Steuereinrichtung 52 übertragen werden, sodass bei der Steuereinrichtung 52 die automatische Aktivierung eines Fernlichts deaktiviert oder blockiert wird.

Bei einer asymmetrischen Verteilung des Nebels, wenn dieser beispielsweise nur am Straßenrand in einem Graben vorhanden ist, kann es sinnvoll sein, dennoch das Fernlicht zu aktivieren, da es nicht zu einer Eigenblendung des Fahrers kommt. Zur Vermessung der Nebelbank 52 kann in der beschriebenen Weise das Licht gerichtet in unterschiedliche Richtungen seitlich und/oder auch mit unterschiedlichen Neigungswinkeln und/oder aus unterschiedlichen Höhen abgestrahlt werden. Hierzu können statische LED-Scheinwerfer mit Segmentierung oder dynamische Scheinwerfer, sie sie für dynamisches Kurvenlicht bereitgestellt sein können, verwendet werden. Es kann auch nur einer der beiden Frontscheinwerfer 18 aktiviert werden. Hiermit können gezielt einzelne Bereiche des Fahruntergrundes 50 und des darüber liegenden Raumes angestrahlt werden. Durch die Kamera 28 im Spiegelfuß 26 kann die Helligkeitsverteilung vor dem Kraftfahrzeug 10 gemessen werden. Durch gezielte Ausleuchtung von Regionen nahe am Fahrzeug (beispielsweise mittels eines Nebelscheinwerfers) in Fahrtrichtung 34 begrenzten Regionen (beispielsweise mittels des statischen LED-Scheinwerfers mit Abblendlicht) und im Fernbereich (mit dem Fernlicht) kann die Position der Reflexion, wie sie entweder durch Nebel oder auf dem Fahruntergrund 52 (nebelfreie Situation) verursacht wird, festgestellt werden.

Eine Nebelwolke oder Nebelbank 52 direkt vor dem Fahrzeug wird durch das Fernlicht stärker erleuchtet als durch die tiefer liegenden Nebelscheinwerfer. Die einzelnen Lichtfunktionen können synchron zur Aufnahme des Kamerabildes ausgelöst werden. Sehr kurze Lichtimpulse nimmt der Fahrer so gar nicht wahr. Die Montage der Kamera 28 im Spiegelfuß 26 mit Blickrichtung vor das Kraftfahrzeug 10 weist den Vorteil auf, dass die Helligkeitsverteilung sich sehr deutlich zwischen den beiden Situationen Nebel und nebelfrei unterscheidet. Meldet der Fernlichtassistent die Aktivierbarkeit des Fernlichts, weil kein Gegenverkehr vorhanden ist, können kurze Lichtimpulse für beispielsweise die drei Distanzen (Nahbereich-Nebelscheinwerfer, Mittelbereich-Abblendlicht durch statische LED-Scheinwerfer, Fernbereich-Fernlicht) ausgesandt werden. Die Kamera 28 detektiert dann die Helligkeitsverteilung vor dem Kraftfahrzeug 10. Ist kein Nebel vorhanden, ist sie im Nahbereich 32 gering, da es keine Reflexion oder Streuung durch Nebel gibt. Somit kann das Fernlicht also aktiviert werden. In einer Nebelwolke oder Nebelbank 52 kommt es zu starken Reflexionen oder Streuungen im Nahbereich 32 und somit zu einer deutlich höheren Helligkeitsverteilung 58 direkt vor dem Kraftfahrzeug 10. In diesem Fall wird das Fernlicht nicht aktiviert und der Fahrer bekommt beispielsweise eine Meldung angezeigt (wie beispielsweise durch eine Symbollampe oder einen Text in beispielsweise dem Kombidisplay). Eine inhomogene Verteilung von Nebel kann durch eine entsprechend inhomogene Ausleuchtung der Szene im Kamerabild B erkannt werden.

Insgesamt ist durch das Beispiel gezeigt, wie durch die Erfindung ein System zur Detektion von Nebel direkt vor dem Fahrzeug bereitgestellt werden kann.

## Patentansprüche

1. Verfahren zum Erkennen von Nebel (52) in einem vorbestimmten Nahbereich (32) vor einem Kraftfahrzeug (10), wobei der Nahbereich (32) ein Ringsegment ist, welches einen Innenradius in einem Bereich von 0,5 Meter bis 2 Meter und einen Außenradius in einem Bereich von 5 Meter bis 25 Meter aufweist, und wobei durch einen Frontscheinwerfer als Lichtquelle (18) des Kraftfahrzeugs (10) ein Lichtkegel (44) in den Nahbereich (32) abgestrahlt wird und währenddessen durch eine Kamera (28) des Kraftfahrzeugs (10) ein Kamerabild (B) zumindest von dem Nahbereich (32) erzeugt wird und von einer Analyseeinrichtung (46) in dem Kamerabild (B) eine örtliche Helligkeitsverteilung (54, 58) ermittelt und das Vorhandensein von Nebel (52) mittels eines Nebelsignals (F) signalisiert wird, falls die Helligkeitsverteilung (54, 58) ein vorbestimmtes Verteilungskriterium erfüllt, wobei das Verteilungskriterium einen erwarteten Helligkeitsbereich (54, 58) in dem Kamerabild (B) definiert, in welchem ein Licht des Lichtkegels (44) im Kamerabild (B) erkennbar ist, falls der Nahbereich (32) entweder nebelfrei oder nebelig ist,
**dadurch gekennzeichnet, dass**
der Lichtkegel (44) als ein weniger als 0,5s andauernder Lichtimpuls abgestrahlt wird.

2. Verfahren nach Anspruch 1, wobei der Lichtkegel (44) mit einer mittleren Abstrahlrichtung abgestrahlt wird, welche bezüglich einer Fahrzeuglängsachse (34) des Kraftfahrzeugs (10) schräg, insbesondere in einem Winkel größer als 20°, insbesondere größer als 30°, ausgerichtet ist.

3. Verfahren nach einem der vorhergehenden Ansprüche, wobei der Lichtkegel (44) als ein weniger als 0,2s andauernder Lichtimpuls abgestrahlt wird.

4. Verfahren nach einem der vorhergehenden Ansprüche, wobei ein Aktivierungszeitpunkt zum Aktivieren der Lichtquelle (18) auf der Grundlage eines Shutter-Signals der Kamera (28) mit einem Aufnahmebeginn des Kamerabilds (B) synchronisiert wird.

5. Verfahren nach einem der vorhergehenden Ansprüche, wobei nacheinander mindestens ein weiterer, gegenüber dem ersten Lichtkegel (44) anders ausgerichteter weiterer Lichtkegel in den Nahbereich (32) abgestrahlt wird und durch die Kamera (28) währenddessen jeweils ein weiteres Kamerabild erzeugt wird und durch die Analyseeinrichtung (46) auf der Grundlage aller Kamerabilder ein Rand des Nebels (52) ermittelt wird.

6. Verfahren nach Anspruch 5, wobei die Lichtkegel durch Verschwenken eines Lichtstrahls eines dynamischen Frontscheinwerfers und/oder nacheinander Aktivieren unterschiedlicher Segmente eines segmentierten LED-Scheinwerfers und/oder durch nacheinander Aktivieren eines Nebelscheinwerfers, eines Abblendlichts und eines Fernlichts erzeugt werden.

7. Verfahren nach einem der vorhergehenden Ansprüche, wobei eine Steuereinrichtung (52) des Kraftfahrzeugs (10) eine Gegenverkehrserkennung durchführt und bei Erkennen einer Abwesenheit von Gegenverkehr ein Fernlicht des Kraftfahrzeugs (10) aktiviert, wobei die Steuereinrichtung (52) das Fernlicht nur bei gleichzeitiger Abwesenheit des Nebelsignals (F) aktiviert.

8. Kraftfahrzeug (10) mit einer Lichtquelle (18) zum Abstrahlen eines Lichtkegels (44) in einen vorbestimmten Nahbereich (32) des Kraftfahrzeugs (10) und mit einer Kamera (28) zum Erzeugen eines Kamerabilds (B) von dem Nahbereich (32) während des Abstrahlens und mit einer Analyseeinrichtung (46) zum Ermitteln einer örtliche Helligkeitsverteilung (54, 58) in dem Kamerabild (B) und zum Signalisieren von Nebel (52) mittels eines Nebelsignals (F), falls die Helligkeitsverteilung (54, 58) ein vorbestimmtes Verteilungskriterium erfüllt, wobei das Kraftfahrzeug (10) dazu ausgelegt ist, ein Verfahren nach einem der vorhergehenden Ansprüche durchzuführen.

9. Kraftfahrzeug (10) nach Anspruch 8, wobei die Kamera (28) in dem Kraftfahrzeug (10) oberhalb eines Kopfbereichs des Fahrersitzes angeordnet, insbesondere in einem Rückspiegelfuß (26) des Kraftfahrzeugs (10) integriert ist.

## Claims

1. System for detecting fog (52) in a predetermined vicinity (32) in front of a motor vehicle (10), wherein the vicinity (32) is an annular segment which has an inner radius in a range from 0.5 metres to 2 metres and an outer radius in a range from 5 metres to 25 metres, and wherein a light cone (44) is emitted into the vicinity (32) by a front headlamp as light source (18) of the motor vehicle (10) and during this a camera image (B) at least of the vicinity (32) is generated by a camera (28) of the motor vehicle (10) and a local brightness distribution (54, 58) in the camera image (B) is determined by an analysis device (46) and the presence of fog (52) is signalised by means of a fog signal (F), in the case that the brightness distribution (54, 58) fulfils a predetermined distribution criterium, wherein the distribution criterium defines an expected brightness distribution (54, 58) in the camera image (B) in which a light of the light cone (44) is perceivable in the camera image (B), in the case that the vicinity (32) is either fog-free or foggy,
**characterised in that**
the light cone (44) is emitted as a light pulse lasting less than 0.5s.

2. Method according to claim 1, wherein the light cone (44) is emitted with a central emission direction which is oriented with respect to a vehicle longitudinal axis (34) of the motor vehicle (10) at an angle, in particular at an angle of greater than 20°, in particular greater than 30°.

3. Method according to any of the preceding claims, wherein the light cone (44) is emitted as a light pulse lasting less than 0.2s.

4. Method according to any of the preceding claims, wherein an activation time point for activating the light source (18) is synchronised with an exposure start of the camera image (B) on the basis of a shutter signal of the camera (28).

5. Method according to any of the preceding claims, wherein one after another at least one further further light cone oriented differently with respect to the first light cone (44) is emitted into the vicinity (32) and during this respectively one further camera image is generated by the camera (28) and an edge of the fog (52) is determined by the analysis device (46) on the basis of all camera images.

6. Method according to claim 5, wherein the light cones are generated by pivoting a light beam of a dynamic front headlamp and/or successive activation of different segments of a segmented LED headlamp and/or by successive activation of a fog lamp, a dipped headlamp and a full beam headlamp.

7. Method according to any of the preceding claims, wherein a control device (52) of the motor vehicle (10) carries out a detection of oncoming traffic and, when a presence of oncoming traffic is recognised, a full beam headlamp of the motor-vehicle (10) is activated, wherein the control device (52) activates the full beam headlamp only at the simultaneous presence of the fog signal (F).

8. Motor vehicle (10) having a light source (18) for emitting a light cone (44) into a predetermined vicinity (32) of the motor vehicle (10) and having a camera (28) for the generation of a camera image (B) of the vicinity (32) during the emitting and having an analysis device (46) for determining a local brightness distribution (54, 58) in the camera image (B) and for the signalling of fog (52) by means of a fog signal (F), in the case that the brightness distribution (54, 58) fulfils a predetermined distribution criterium, wherein the motor vehicle (10) is designed to carry out a method according to any of the preceding claims.

9. Motor vehicle (10) according to claim 8, wherein the camera (28) is disposed in the motor-vehicle (10) above a head region of the driver's seat, in particular is integrated in a rearview mirror foot (26) of the motor vehicle (10).

## Revendications

1. Procédé de détection de brouillard (52) dans une zone proche (32) prédéterminée avant un véhicule automobile (10), dans lequel la zone proche (32) est un segment annulaire qui présente un rayon intérieur dans une zone de 0,5 mètre à 2 mètres et un rayon extérieur dans une zone de 5 mètres à 25 mètres, et dans lequel un cône lumineux (44) est irradié dans la zone proche (32) par un phare avant en tant que source de lumière (18) du véhicule automobile (10) et entre-temps une image de caméra (B) au moins de la zone proche (32) est générée par une caméra (28) du véhicule automobile (10) et une répartition de luminosité (54, 58) locale est déterminée par un dispositif d'analyse (46) dans l'image de caméra (B) et la présence de brouillard (52) est signalisée au moyen d'un signal de brouillard (F), au cas où la répartition de luminosité (54, 58) remplit un critère de répartition prédéterminée, dans lequel le critère de répartition définit une zone de luminosité (54, 58) attendue dans l'image de caméra (B), dans laquelle une lumière du cône lumineux (44) est détectable dans l'image de caméra (B) au cas où la zone proche (32) est exempte de brouillard ou brumeuse,
**caractérisé en ce que**
le cône lumineux (44) est irradié sous forme d'impulsion lumineuse durant moins de 0,5 s.

2. Procédé selon la revendication 1, dans lequel le cône lumineux (44) est irradié avec un sens de rayonnement médian qui est orienté en biais par rapport à un axe longitudinal de véhicule (34) du véhicule automobile (10), en particulier dans un angle supérieur à 20°, en particulier supérieur à 30°.

3. Procédé selon l'une quelconque des revendications précédentes, dans lequel le cône lumineux (44) est irradié sous forme d'impulsion lumineuse durant moins de 0,2 s.

4. Procédé selon l'une quelconque des revendications précédentes, dans lequel un moment d'activation est synchronisé pour l'activation de la source de lumière (18) sur la base d'un signal d'obturateur de la caméra (28) avec un début de prise de l'image de caméra (B).

5. Procédé selon l'une quelconque des revendications précédentes, dans lequel au moins un autre autre cône lumineux orienté autrement par rapport au premier cône lumineux (44) est irradié dans la zone proche (32) l'un après l'autre et entre-temps respectivement une autre image de caméra est générée par la caméra (28) et un bord du brouillard (52) est déterminé par le dispositif d'analyse (46) sur la base de toutes les images de caméra.

6. Procédé selon la revendication 5, dans lequel les cônes lumineux sont générés par pivotement d'un faisceau lumineux d'un phare avant dynamique et/ou activation les uns après les autres de différents segments d'un phare à DEL segmenté et/ou par l'activation les uns après les autres d'un phare antibrouillard, d'un feu de croisement et d'un feu de route.

7. Procédé selon l'une quelconque des revendications précédentes, dans lequel un dispositif de commande (52) du véhicule automobile (10) réalise une reconnaissance de circulation bidirectionnelle et active lors de la détection d'une absence de circulation bidirectionnelle un feu de route du véhicule automobile (10), dans lequel le dispositif de commande (52) active le feu de route seulement en cas d'absence simultanée du signal de brouillard (F).

8. Véhicule automobile (10) avec une source de lumière (18) pour l'irradiation d'un cône lumineux (44) dans une zone proche (32) prédéterminée du véhicule automobile (10) et avec une caméra (28) pour la génération d'une image de caméra (B) de la zone proche (32) pendant l'irradiation et avec un dispositif d'analyse (46) pour la détermination d'une répartition de luminosité (54, 58) locale dans l'image de caméra (B) et pour la signalisation de brouillard (52) au moyen d'un signal de brouillard (F) au cas où la répartition de luminosité (54, 58) remplit un critère de répartition prédéterminé, dans lequel le véhicule automobile (10) est conçu afin de réaliser un procédé selon l'une quelconque des revendications précédentes.

9. Véhicule automobile (10) selon la revendication 8, dans lequel la caméra (28) est agencée dans le véhicule automobile (10) au-dessus d'une zone de tête du siège de conducteur, en particulier est intégrée dans un pied de rétroviseur (26) du véhicule automobile (10).
